# EUROPEAN PATENT APPLICATION

(11) **EP 4 593 253 A2**
(43) Date of publication of application: **30.07.2025**
(21) Application number: 25175295.2
(22) Date of filing: 16.04.2018
(51) Int. Cl.: H02K 1/14

(54) **ELECTRIC SYNCHRONOUS MOTOR**

(30) Priority: 03.05.2017 SE 1730124
(62) Divisional of application: 18718147.4
(71) Applicant: Atlas Copco Industrial Technique AB, 105 23 Stockholm (SE)
(72) Inventor: Millinger, Jonas, 12053 Årsta (SE)
(74) Representative: Atlas Copco Industrial Technique AB

(57) **Abstract**

The present disclosure relates to an electric synchronous motor 10 for an electrical power tool. The electric synchronous motor 10 comprises a tubular rotor 11 magnetized to have circumferential polar alternations. The electric synchronous motor 10 further comprises a tubular slotless stator yoke 12 of ferromagnetic material. The tubular rotor 11 is magnetized to have two pairs of circumferential polar alternations and the stator 13 comprises three concentrically wound coils 14. The three concentrically wound coils 14 are assembled in a non-overlapping fashion inside the tubular stator yoke 12 to form a concentrated motor winding.

## Description

### Technical field

The invention relates to an electric synchronous motor. In particular the invention relates to an electric synchronous motor for power tools that is less complex to manufacture.

### Background

Slotless electrical permanent magnet synchronous motors, in contrast to their slotted counterparts, can operate at high rotational speeds. High speed operation result not only in high efficiency and power density, but low weight as well. Therefore, slotless permanent magnet machines are preferred in industrial power tools.

The conventional way of making a slotless motor for such an application is to use a 2-pole rotor inside a tubular stator yoke, which internally carries a three-phase winding comprising three coils. The commonly used winding configuration is the so-called "overlapping winding technique", characterized by overlapping of the end-windings in a complex manner.

Particularly, the combination of an overlapping winding technique and a slotless stator design results in a very complex assembly process.

Hence, there exists a need for an improved slotless electrical motor to be used in an electrical power tool.

### Summary

It is an object of the invention to provide an improved slotless electrical motor to be used in an electrical power tool.

This object is achieved in accordance with an aspect of the disclosure by an electric synchronous motor for an electrical power tool according to independent claim 1.

An advantage with the exemplary embodiments of the disclosure is that manufacturing costs can be significantly reduced since the three concentrically wound coils can be inserted individually in a non-overlapping fashion called the "concentrated winding technique".

By using the so-called "concentrated winding technique", characterized by non-overlapping end-windings, the assembly process can be significantly simplified, with higher quality and reduced costs as consequence.

However, such a winding technique often result in reduced performance and unacceptable levels of vibrations and noise. This is the case for the case for the 2-pole rotor in combination with a stator deploying the said concentrated winding technique.

One aspect of the present disclosure relates to the design of an electrical permanent magnet synchronous motor deploying the low-cost concentrated winding technique, but with maintained performance both in terms of vibrations, noise as well as efficiency.

### Brief description of the drawings

The invention will now be described in more detail and with reference to the accompanying drawings, in which:
- Fig. 1 shows a cross-section of the electric synchronous motor 10 according to an exemplary embodiment of the present disclosure.
- Fig. 2 illustrates a view of one concentrically wound coil 14.

### Detailed description

In order to reduce stator manufacturing costs, the inventor has realised that the non-overlapping concentrated winding technique is advantageous. However, concentrated motor windings give uprise to higher harmonic content, resulting in increased losses, vibrations and noise.

The conventional 2-pole rotor has been tested in combination with a stator deploying a concentrated winding, comprising 3 coils. Apart from increased losses, unacceptable levels of vibrations, radial forces and noise were detected.

The 2-pole rotor is relatively simple to manufacture since a plurality of ring-shaped, anisotropic magnets can be assembled on a shaft, before machining to correct dimensions.

The 4-pole rotor however, requires at least 4 peripheral segments for one magnet ring. The complexity and cost of such a rotor is much higher, but allows re-optimization of the cross-sectional geometry with increased torque performance of up to 80 %.

However, the overlapping winding of a 4-pole design comprises 6 windings, and is very complex to assemble. The quality is thus further reduced, with increased costs as consequence.

The present disclosure relates to the usage of three concentrically wound coils, assembled in a non-overlapping arrangement to operate a rotor with two pairs of circumferential polar alternations. This is possible since the three concentrically wound coils generate several harmonic components, of which one is the 4-pole magnetic field. The drawback of the technique is a 30 % loss in torque performance, compared to an overlapping stator winding. However, the concentrated winding technique enables significantly shorter end-windings, which either reduces the motor size, or increases the active motor length, resulting in a payback in the torque/volume ratio. Further, the level of vibrations, noise and radial forces for the combination of three concentrically wound coils, and a rotor with two pairs of circumferential polar alternations are sufficiently low from a power tool point of view.

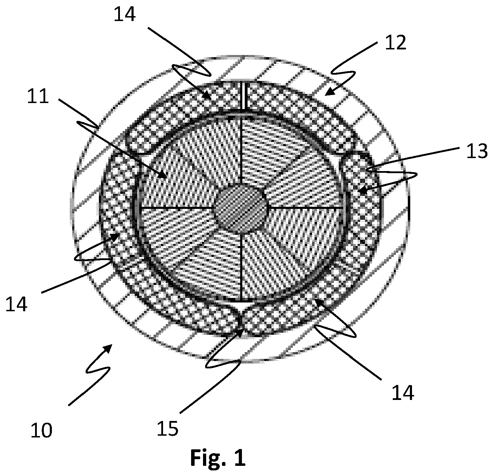

Figure 1 illustrates an exemplary embodiment of an electric synchronous motor 10 for an electrical power tool according to the present disclosure. As can be seen in figure 1, the electric synchronous motor 10 comprises a tubular rotor 11 magnetized to have circumferential polar alternations. Further the electric synchronous motor 10 comprises a tubular slotless stator yoke 12 of ferromagnetic material. The tubular rotor 11 is magnetized to have two pairs of circumferential polar alternations. Yet further the electric synchronous motor 10 comprises a stator 13 with three concentrically wound coils 14, wherein the three concentrically wound coils 14 are assembled in a non-overlapping fashion inside the tubular stator yoke 12 to form a concentrated motor winding.

According to one exemplary embodiment the tubular rotor 11 is made of anisotropic rare-earth magnets (magnets with a preferred magnetization direction) in order to maximize the motor torque performance. According to one exemplary embodiment the two pairs of circumferential polar alternations requires the use of at least 4 circumferential anisotropic magnet pieces. According to another exemplary embodiment the two pairs of circumferential polar alternations requires the use of a multiple of 4, such 8, circumferential anisotropic magnet pieces.

According to one exemplary embodiment, the non-overlapping concentrated winding is characterized by a coil arrangement in which each coil can be inserted individually (in contrast to its conventional counterpart, the full-pitch overlapping winding), thus significantly simplifying the assembly process. According to one another exemplary embodiment of the electric synchronous motor 10, the three concentrically wound coils 14 are symmetrically distributed inside the stator yoke 12.

According to one exemplary embodiment the tubular slotless stator yoke 12 is made of so-called "electrical steel" in order to maximize torque performance. According to one another exemplary embodiment the tubular slotless stator yoke 12 is made of a plurality of thin metal sheets, axially stacked to form the tubular stator yoke.

In another exemplary embodiment of the electric synchronous motor 10, the three concentrically wound coils 14 are arranged in a self-supporting manner. In one exemplary embodiment of the electric synchronous motor 10 the three concentrically wound coils 14 are fixed by vacuum impregnation of a synthetic resin, followed by curing to final shape and position.

In a further exemplary embodiment of the electric synchronous motor 10, the diameter of the tubular rotor 11 is larger than 50 percent of the outer diameter of the tubular slotless stator yoke 12. One advantage with this embodiment is increased efficiency.

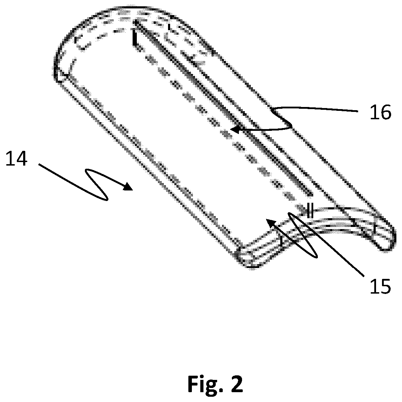

Figure 2 illustrates a view of one concentrically wound coil 14. In one exemplary embodiment of the electric synchronous motor 10, the three concentrically wound coils 14 are surrounded by an isolating material 15. According to one exemplary embodiment of the electric synchronous motor 10 the isolating material 15 is a polyester-based electrical insulation paper sheet, providing mechanical support during the assembly of the winding. Another advantage with the polyester-based electrical insulation paper sheet is that it satisfies the electrical insulation requirements.

Figure 2 further illustrates a bobbin 16. In a further exemplary embodiment of the electric synchronous motor 10, the three concentrically wound coils 14 are wound on the bobbins 16. An advantage of winding the three coils 14 on the bobbins 16 is that the bobbins not only simplifies the coil manufacturing, but the winding assembly as well.

In a yet further exemplary embodiment of the electric synchronous motor 10, the bobbins 16 are glued on the insulating material 15. An advantage with gluing the bobbins 16 on the insulating material 15 is that not only simplifies the coil manufacturing, but the winding assembly as well.

In a further exemplary embodiment of the electric synchronous motor 10, the tubular slotless stator yoke 12 comprises a stack of axially laminated metal sheets. In a further exemplary embodiment of the electric synchronous motor 10, the tubular slotless stator yoke 12 comprises a plurality of axially stacked metal sheet rings, mechanically supported by peripheral welding seams. In one exemplary embodiment of the electric synchronous motor 10 the peripheral welding seams are symmetrically distributed.

According to another exemplary embodiment of the electric synchronous motor 10, the three concentrically wound coils 14 are glued on the isolating material 15. One advantage with this embodiment is that it enables simplified series manufacturing of the concentrically wound coils 14.

In another exemplary embodiment of the electric synchronous motor 10, the tubular slotless stator yoke 12 is segmented into three equal pieces. One advantage with such a modular assembly is that it enables simplified automated manufacturing of the equal pieces.

In a further exemplary embodiment of the electric synchronous motor 10 the three concentrically wound coils 14 are glued on the inside of each piece of stator yoke segment.

### Itemized list of embodiments

1. An electric synchronous motor (10) for an electrical power tool, comprising a:
   - tubular rotor (11) magnetized to have circumferential polar alternations;
   - a tubular slotless stator yoke (12) of ferromagnetic material **characterized in** that
   - the tubular rotor (11) is magnetized to have two pairs of circumferential polar alternations and that
   - a stator (13) comprises three concentrically wound coils (14), wherein the three concentrically wound coils (14) are assembled in a non-overlapping fashion inside the tubular stator yoke (12) to form a concentrated motor winding.
2. The electric synchronous motor (10) according to item 1, wherein the three concentrically wound coils (14) are symmetrically distributed inside the stator yoke (12).
3. The electric synchronous motor (10) according to any of items 1 to 2, wherein the three concentrically wound coils (14) are arranged in a self-supporting manner.
4. The electric synchronous motor (10) according to any of items 1 to 3, wherein the diameter of the tubular rotor (11) is larger than 50 percent of the outer diameter of the tubular slotless stator yoke (12).
5. The electric synchronous motor (10) according to any of items 1 to 4, wherein the three concentrically wound coils (14) are surrounded by an isolating material (15).
6. The electric synchronous motor (10) according to any of items 1 to 5, wherein the tubular slotless stator yoke (12) comprises stacked metal sheets.
7. The electric synchronous motor (10) according to item 5, wherein the three concentrically wound coils (14) are glued on the insulating material (15).
8. The electric synchronous motor (10) according to any of items 1 to 7, wherein the tubular slotless stator yoke (12) are segmented into three equal pieces.
9. The electric synchronous motor (10) according to item 8, wherein the three concentrically wound coils (14) are glued on the inside of each piece of stator yoke segment.
10. The electric synchronous motor (10) according to any of items 1 to 9, wherein the three concentrically wound coils (14) are winded on tree equally distributed bobbins (16).
11. The electric synchronous motor (10) according to item 10, wherein the tree equally distributed bobbins (16) are glued on the insulating material (15).

## Claims

1. An electric synchronous motor (10) for an electrical power tool, comprising a:
- tubular rotor (11) magnetized to have circumferential polar alternations;
- a tubular slotless stator yoke (12) of ferromagnetic material **characterized in that**
- the tubular rotor (11) is magnetized to have no more and no less than two pairs of circumferential polar alternations and that
- a stator (13) comprises no more and no less than three concentrically wound coils (14), wherein the three concentrically wound coils (14) are assembled in a non-overlapping fashion inside the tubular stator yoke (12) to form a concentrated motor winding,
wherein the three concentrically wound coils (14) are arranged in a self-supporting manner.

2. The electric synchronous motor (10) according to claim 1, wherein the three concentrically wound coils (14) are symmetrically distributed inside the stator yoke (12).

3. The electric synchronous motor (10) according to any of claims 1 to 3, wherein the diameter of the tubular rotor (11) is larger than 50 percent of the outer diameter of the tubular slotless stator yoke (12).

4. The electric synchronous motor (10) according to any of claims 1 to 4, wherein the three concentrically wound coils (14) are surrounded by an isolating material (15).

5. The electric synchronous motor (10) according to any of claims 1 to 5, wherein the tubular slotless stator yoke (12) comprises stacked metal sheets.

6. The electric synchronous motor (10) according to claim 4, wherein the three concentrically wound coils (14) are glued on the insulating material (15).

7. The electric synchronous motor (10) according to any of claims 1 to 6, wherein the tubular slotless stator yoke (12) are segmented into three equal pieces.

8. The electric synchronous motor (10) according to claim 7, wherein the three concentrically wound coils (14) are glued on the inside of each piece of stator yoke segment.

9. The electric synchronous motor (10) according to any of claims 1 to 8, wherein the three concentrically wound coils (14) are winded on tree equally distributed bobbins (16).

10. The electric synchronous motor (10) according to claim 9, wherein the tree equally distributed bobbins (16) are glued on the insulating material (15).
